# EUROPÄISCHE PATENTSCHRIFT

(11) **EP 2 785 566 B1**
(45) Veröffentlichungstag und Bekanntmachung des Hinweises auf die Patenterteilung: **04.11.2015**
(21) Anmeldenummer: 12790408.4
(22) Anmeldetag: 07.11.2012
(51) Int. Cl.: B60R 22/34

(54) **GURTAUFROLLER MIT ZWEI PARALLEL WIRKENDEN KRAFTBEGRENZUNGSEINRICHTUNGEN**
BELT RETRACTOR WITH TWO FORCE-LIMITING DEVICES ACTING IN PARALLEL
ENROULEUR DE CEINTURE DOTÉ DE DEUX DISPOSITIFS DE LIMITATION DE LA FORCE AGISSANT EN PARALLÈLE

(30) Priorität: 30.11.2011 DE 102011087413
(43) Veröffentlichungstag der Anmeldung: 08.10.2014
(73) Patentinhaber: Autoliv Development AB, 447 83 Vårgårda (SE)
(72) Erfinder: SINGER, Klaus-Peter, 22399 Hamburg (DE); JABUSCH, Ronald, 25336 Elmshorn (DE)
(74) Vertreter: Müller Verweyen
(86) Internationale Anmeldenummer: PCT/EP2012/004626
(87) Internationale Veröffentlichungsnummer: WO 2013/079150

(56) Entgegenhaltungen:
- DE-U1- 29 614 587
- US-A- 4 323 205
- US-A1- 2002 050 542
- US-A1- 2006 208 126

## Beschreibung

Die Erfindung betrifft einen Gurtaufroller mit zwei parallel wirkenden Kraftbegrenzungseinrichtungen mit den Merkmalen des Oberbegriffs von Anspruch 1.

Ein Gurtaufroller der gattungsgemäßen Art ist beispielsweise aus der US 2003/0 050 542 A1 bekannt. Der dort beschriebene Gurtaufroller weist eine zweiteilige Gurtwelle mit einem zwischen den Teilen der Gurtwelle angeordneten Torsionsstab auf. Auf einem der Teile der Gurtwelle, dem Gurtwellenkörper, ist ein Sicherheitsgurt aufwickelbar, während der andere Teil der Gurtwelle, auch Profilkopf genannt, bei einer fahrzeugsensitiven oder gurtbandsensitiven Ansteuerung einer Blockiereinrichtung fahrzeugfest blockiert wird. Für den Fall, dass die Gurtauszugskraft bei einem blockierten zweiten Teil der Gurtwelle eine vorbestimmte Gurtauszugskraft übersteigt, kann der Gurtwellenkörper durch eine plastische Verformung des Torsionsstabes um seine Längsachse in Gurtauszugsrichtung rotieren. Die dabei zu überwindende vorbestimmte Gurtauszugskraft wird durch die plastische Verformungsgrenze des Torsionsstabes bestimmt. Der Torsionsstab bildet damit die erste Kraftbegrenzungseinrichtung.

Ferner ist eine zweite Kraftbegrenzungseinrichtung vorgesehen, welche parallel zu dem Torsionsstab wirkt, also ebenfalls zwischen dem ersten und dem zweiten Teil der Gurtwelle angeordnet ist. Durch die zweite Kraftbegrenzungseinrichtung kann die Kraftbegrenzungscharakteristik unabhängig von dem Torsionsstab verändert werden, so dass z.B. degressive oder progressive Kraftbegrenzungscharakteristiken verwirklicht werden können. Ferner kann durch die zweite Kraftbegrenzungseinrichtung ein kurzzeitiger Abfall oder Anstieg der Gurtauszugskraft in einer Anfangsphase der Aktivierung der ersten Kraftbegrenzungseinrichtung soweit kompensiert werden, dass die Kraftbegrenzungscharakteristik des Gurtaufrollers insgesamt gleichmäßiger und möglichst unmittelbar mit dem beginnenden Gurtauszug entsprechend eines vorgegebenen Kraftbegrenzungsniveaus verläuft. Die zweite Kraftbegrenzungseinrichtung kann durch verschiedene plastisch oder elastisch verformbare Abschnitte, wie z.B. Abscherstifte oder eine Torsionshülse verwirklicht sein, welche die beiden Teile der Gurtwelle parallel zu dem Torsionsstab verbinden. Die Gurtbandauszugslänge, während der die zweite Kraftbegrenzungseinrichtung wirkt, ist durch die konstruktive Ausbildung des plastisch verformbaren Abschnittes begrenzt.

Aus der DE 201 10 423 U1 ist ferner ein Gurtaufroller bekannt, bei dem die zweite Kraftbegrenzungseinrichtung durch ein Metallband gebildet ist, welches während des kraftbegrenzten Gurtbandauszuges durch eine Schikane gezogen wird. Der Vorteil dieser Lösung ist, dass die Gurtauszugslänge, während der die zweite Kraftbegrenzungseinrichtung wirkt, durch die Verwendung eines entsprechend langen Metallbandes erheblich verlängert werden kann, wobei die vernichtete Energie und das dadurch bewirkte Kraftbegrenzungsniveau während des Durchziehens des Metallbandes durch die Schikane nahezu gleichbleibend ist. Die Schikane selbst ist durch ein Einlegeteil verwirklicht, welches an einem der Teile der Gurtwelle eingehängt ist, während das Metallband an dem jeweils anderen Teil der Gurtwelle zugfest gehalten ist.

Aufgabe der Erfindung ist es, einen Gurtaufroller mit zwei parallel wirkenden Kraftbegrenzungseinrichtungen zu schaffen, welcher möglichst einfach aufgebaut sein soll.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen zu entnehmen.

Gemäß dem Grundgedanken der Erfindung wird vorgeschlagen, dass an dem ersten oder dem zweiten Teil der Gurtwelle plastisch verformbare Formgestaltungen vorgesehen sind, welche in den von der Umlenkstelle während des Umlaufens durchlaufenen Bereich des Ringraumes hineinragen. Da die Formgestaltungen vorschlagsgemäß in den von der Umlenkstelle durchlaufenen Bereich des Ringraumes hineinragen, werden diese entweder abgeschert oder das Bandelement selbst wird verformt, so dass parallel zu der in der umlaufenden Umlenkstelle vernichteten Energie zusätzlich Energie vernichtet wird, welche zu einer kurzzeitigen Erhöhung des Kraftbegrenzungsniveaus führt.

Der vorgeschlagene Gurtaufroller weist gegenüber den im Stand der Technik bekannten Lösungen mehrere Vorteile auf. Der Gurtaufroller ist kostengünstig und einfach zu montieren, da die zweite Kraftbegrenzungseinrichtung allein durch das umgelenkte Bandelement gebildet ist. Weitere bisher benötigte Bauteile, wie z.B. eine Schikane, sind nicht erforderlich. Ferner erfolgt die Energievernichtung allein durch das Umlaufen der Umlenkstelle, in der das Bandelement durch eine fortlaufende gleichbleibende Biegung auf einem gleichbleibenden Niveau energieverzehrend verformt wird. Ferner kann die Dauer der Wirkung der zweiten Kraftbegrenzungseinrichtung durch die Wahl eines entsprechend langen Bandelementes verlängert werden.

Ein besonders einfacher Aufbau des Gurtaufrollers kann dabei dadurch geschaffen werden, indem das Bandelement mit einem Ende des ersten oder zweiten Abschnitts formschlüssig entgegen der Drehrichtung des ersten Teils während des kraftbegrenzten Gurtbandauszuges an dem ersten oder zweiten Teil der Gurtwelle festgelegt ist. Durch die vorgeschlagene Festlegung des Bandelementes wird dieses mit der beginnenden Relativbewegung unmittelbar durch Übertragung einer Druckkraft ab- oder aufgewickelt. Dabei ist es von besonderem Vorteil, dass zur Festlegung des Bandelementes keine gesonderten Teile oder Montageschritte erforderlich sind und das Bandelement nur eingelegt werden muss.

Weiter wird vorgeschlagen, dass das Bandelement wenigstens zwei Umlenkstellen aufweist, welche symmetrisch zu der Drehachse des Gurtaufrollers angeordnet sind. Durch die vorgeschlagenen zwei Umlenkstellen können symmetrisch wirkende Kräfte bei der Aktivierung der zweiten Kraftbegrenzungseinrichtung realisiert werden, welche sich zur Verminderung der Belastung aller Bauteile zumindest teilweise gegenseitig aufheben.

In diesem Fall kann das zweite Teil der Gurtwelle an der Stirnseite eine radial gerichtete Nut aufweisen, in die das Bandelement eingelegt ist. Durch die Nut wird es ermöglicht ein einziges Bandelement zu verwenden, welches an den Endabschnitten in dem Ringraum gewickelt ist und zwei Umlenkstellen aufweist, die über den durch die Nut hindurch geführten Mittenabschnitt des Bandelementes miteinander verbunden sind. Der durch die Nut geführte Mittenabschnitt des Bandelementes dient dabei gleichzeitig zur Schaffung einer Zugkraftverbindung der beiden Umlenkstellen, so dass das Bandelement selbst keiner gesonderten Befestigung bedarf, sondern lediglich in die Nut eingehängt werden muss.

Weiter wird vorgeschlagen, dass die radial äußere Wandung und die radial innere Wandung des Ringraumes einen in Umfangsrichtung zunehmenden oder abnehmenden Abstand aufweisen. Durch den zunehmenden oder abnehmenden Abstand der Wandungen kann das durch die zweite Kraftbegrenzungseinrichtung bewirkte Kraftbegrenzungsniveau erhöht oder verringert werden, da die in der umlaufenden Umlenkstelle vernichtete Energie unmittelbar von dem Umlenkradius, d.h. von dem Abstand der Wandungen, abhängt. Dabei gilt, je kleiner der Umlenkradius, also je geringer der Abstand der Wandungen ist, desto größer ist die vernichtete Energie und das dadurch bewirkte Kraftbegrenzungsniveau. Damit können mit der zweiten Kraftbegrenzungseinrichtung auf einfache Art und Weise sowohl progressive als auch degressive Kraftbegrenzungsverläufe realisiert werden.

Besonders vorteilhaft ist die vorgeschlagene zweite Kraftbegrenzungseinrichtung, wenn die erste Kraftbegrenzungseinrichtung eine geschwindigkeitsgeregelte Kraftbegrenzungseinrichtung ist. Grundsätzlich weisen geschwindigkeitsgeregelte Kraftbegrenzungseinrichtungen den Nachteil auf, dass das vorbestimmte Kraftbegrenzungsniveau erst ab einer bestimmten Geschwindigkeit erreicht wird bzw. nach dem Überwinden eines Losbrechmomentes kurzzeitig auf ein geringeres Kraftbegrenzungsniveau abfällt. Dieser Anstieg des Kraftbegrenzungsniveaus bzw. der kurzzeitige Abfall des Kraftbegrenzungsniveaus kann durch das durch die zweite Kraftbegrenzungseinrichtung bewirkte Kraftbegrenzungsniveau zumindest zu einem Teil kompensiert werden, so dass der Kraftbegrenzungsverlauf insgesamt gleichmäßiger ist, und das vorbestimmten Kraftbegrenzungsniveau früher erreicht wird.

Ferner wird vorgeschlagen, dass die geschwindigkeitsgeregelte Kraftbegrenzungseinrichtung ringförmig ausgebildet und konzentrisch zu der zweiten Kraftbegrenzungseinrichtung angeordnet ist. Durch die vorgeschlagene Ausbildung und Anordnung der Kraftbegrenzungseinrichtungen können sich die wirkenden Radial- und Umfangskräfte ausgleichen, so dass das erste und das zweite Teil der Gurtwelle während der Aktivierung der Kraftbegrenzungseinrichtungen so gering wie möglich belastet werden.

Die während der Aktivierung der Kraftbegrenzungseinrichtungen wirkenden Kräfte und Momente können weiter verringert werden, indem die geschwindigkeitsgeregelte Kraftbegrenzungseinrichtung axial überlappend zu der ersten Kraftbegrenzungseinrichtung angeordnet ist.

Ferner kann das Kraftbegrenzungsniveau des Gurtaufrollers auch dadurch verringert werden, indem das Bandelement abschnittsweise durch Ausnehmungen, durch eine geringere Breite oder Dicke geschwächt ist. Die Verringerung des Kraftbegrenzungsniveaus ist in diesem Fall durch eine gezielt vorgenommene Materialschwächung des Bandelementes in einem Abschnitt begründet, durch die weniger Energie beim Durchlauf des jeweiligen Abschnitts durch die Umlenkstelle vernichtet wird.

Gemäß einer weiteren bevorzugten Weiterbildung wird vorgeschlagen, dass wenigstens eine der Ausnehmungen als eine beim Durchlaufen der Umlenkstelle brechende Sollbruchstelle ausgebildet ist. Das Bandelement bricht dadurch im Bereich der Sollbruchstelle, so dass während der weiteren Drehbewegung der Gurtwelle nicht mehr oder nur noch kurzzeitig und sehr geringfügig verformt wird und die durch das Bandelement bewirkte Kraftbegrenzung schlagartig gesenkt wird. Dabei kann das Bandelement zwei gleichzeitig brechende Sollbruchstellen oder auch zwei zeitversetzt brechende Sollbruchstellen aufweisen, wodurch das Kraftbegrenzungsniveau in Stufen oder auch schlagartig auf Null reduziert werden kann.

Die Erfindung wird im Folgenden anhand bevorzugter Ausführungsformen unter Bezugnahme auf die beigefügten Figuren näher erläutert. Dabei zeigt:
- Fig. 1-5:: einen erfindungsgemäßen Gurtaufroller mit einer ersten Kraftbegrenzungseinrichtung in Form einer geschwindigkeitsgeregelten Kraftbegrenzungseinrichtung;
- Fig. 6-10:: einen erfindungsgemäßen Gurtaufroller mit einer ersten Kraftbegrenzungseinrichtung in Form eines Torsionsstabes;
- Fig. 11-12:: eine zweite Kraftbegrenzungseinrichtung in Form eines Bandelementes mit Ausnehmungen oder in den Verformungsweg der Umlenkstellen hineinragenden Formgestaltungen;
- Fig. 13-14:: zwei verschiedene Ausführungsformen mit einem Bandelement mit zwei Sollbruchstellen.

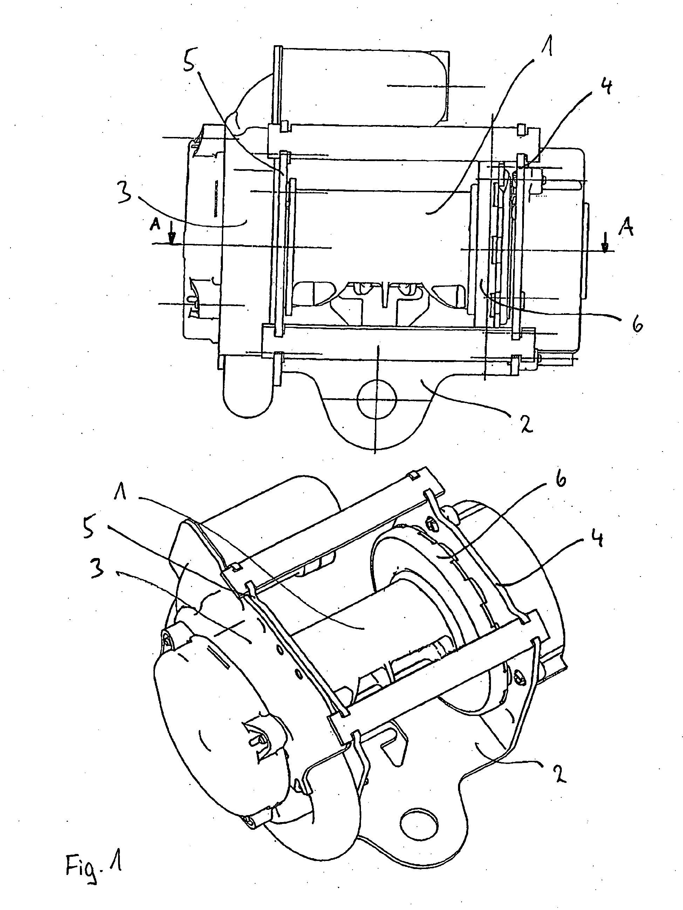

In der Figur 1 ist ein Gurtaufroller mit einer zweiteiligen, in den Schenkeln 4 und 5 eines Rahmens 2 drehbar gelagerten Gurtwelle 1 zu erkennen. An dem Schenkel 5 ist eine pyrotechnische Straffeinrichtung 3 vorgesehen, welche die Gurtwelle 1 in einer Frühphase des Unfalls vor dem Beginn der Vorverlagerung des Insassen schlagartig in Aufwickelrichtung antreibt und eventuell in dem Sicherheitsgurt vorhandene Gurtlose herauszieht. An dem Schenkel 4 ist ferner eine erste Kraftbegrenzungseinrichtung 6 in Form einer ringförmigen, zu der Gurtwelle 1 konzentrisch angeordneten geschwindigkeitsgeregelten Kraftbegrenzungseinrichtung vorgesehen.

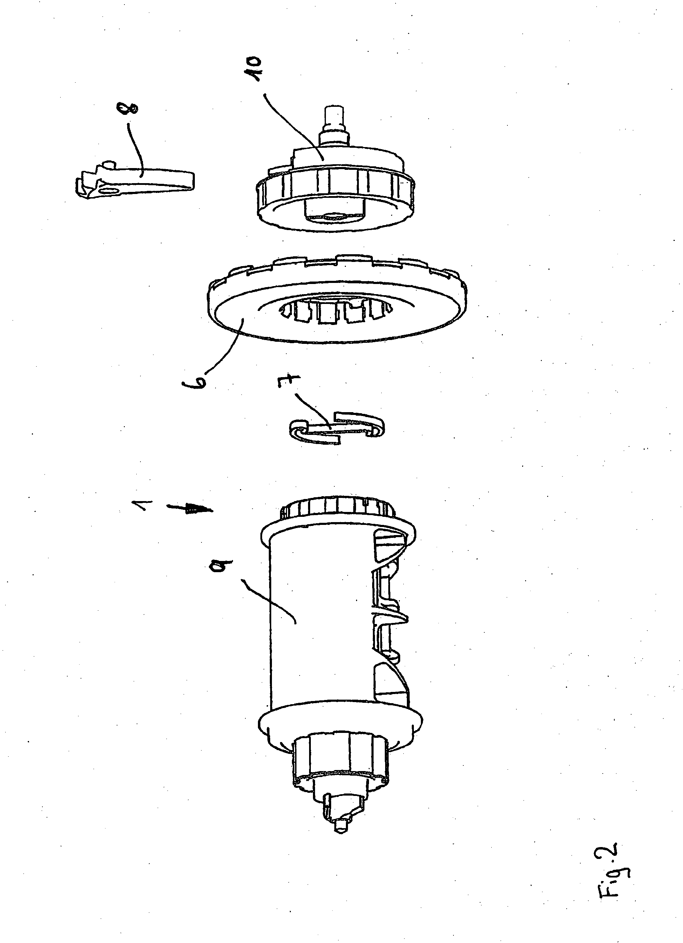

In der Figur 2 ist die zweiteilige Gurtwelle 1 in Explosionsdarstellung mit einem ersten Teil 9 und einem zweiten Teil 10 zu erkennen. Das erste Teil 9 ist in diesem Fall ein Gurtwellenkörper, auf dem ein Sicherheitsgurt aufwickelbar ist, und das zweite Teil 10 ist ein Profilkopf, welcher Träger einer Blockiereinrichtung 8 in Form einer Blockierklinke ist. Bei einem Überschreiten von vorbestimmten Beschleunigungswerten des Fahrzeuges oder des Gurtbandauszuges wird die Blockiereinrichtung 8 angesteuert, d.h. die Blockierklinke steuert in eine Verzahnung an dem Schenkel 4 ein und blockiert das zweite Teil 10 fahrzeugfest entgegen der Gurtauszugsrichtung. Ferner ist neben der ersten Kraftbegrenzungseinrichtung 6 eine zweite Kraftbegrenzungseinrichtung 7 zu erkennen, welche, wie nachfolgend noch beschrieben wird, ebenfalls zwischen den beiden Teilen 9 und 10 der Gurtwelle 1 angeordnet ist und parallel zu der ersten Kraftbegrenzungseinrichtung 6 wirkt. Gleichzeitig sind die beiden Teile 9 und 10 der Gurtwelle 1 über die beiden Kraftbegrenzungseinrichtungen 6 und 7 miteinander verbunden, so dass sie im Normalgebrauch, also vor der Aktivierung der Kraftbegrenzungseinrichtungen 6 und 7, als ein fester Verbund anzusehen sind.

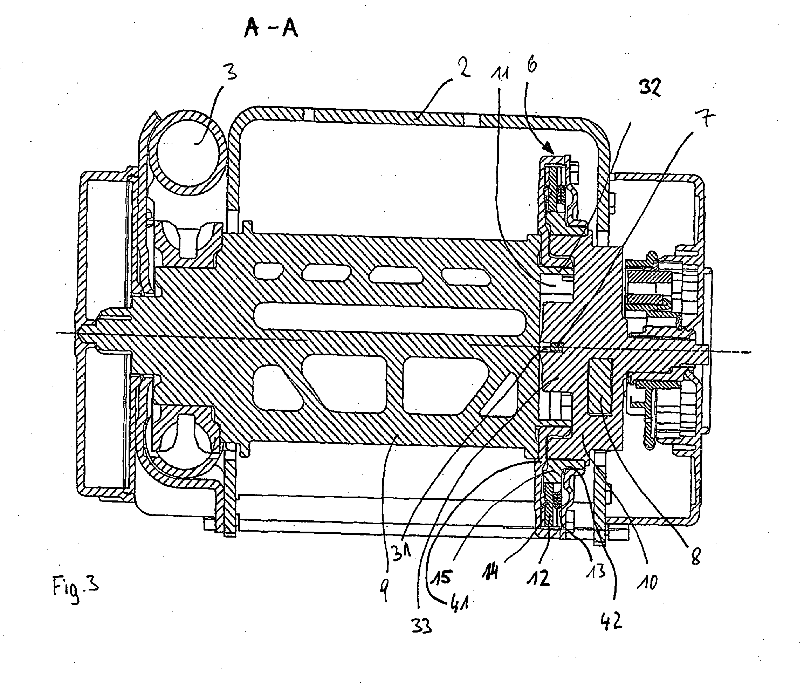

In der Figur 3 ist der Gurtaufroller aus der oberen Darstellung der Figur 1 in Schnittrichtung A-A zu erkennen. Die geschwindigkeitsgeregelte Kraftbegrenzungseinrichtung ist mit einer ersten Baugruppe 41 auf dem ersten Teil 9 der Gurtwelle 1 und mit einer zweiten Baugruppe 42 auf dem zweiten Teil 10 der Gurtwelle 1 festgelegt. Ferner ist eine Schwingscheibe 12 vorgesehen, welche wechselweise über an den Seiten vorgesehene Verzahnungspaare 13 und 14 mit der ersten Baugruppe 41 oder mit der zweiten Baugruppe 42 in Eingriff gelangt. Die Verzahnungsscheibe 12 schwingt während der kraftbegrenzten Relativbewegung senkrecht zu der Relativbewegung hin und her, wobei sie periodisch beschleunigt und abgebremst wird.

Durch dieses Abbremsen und Beschleunigen der Schwingscheibe 12 wird die der Kraftbegrenzung zugrundeliegende Energievernichtung bewirkt. Die Relativbewegung der beiden Teile 9 und 10 der Gurtwelle 1 zueinander wird hier allein durch die Bewegung der Schwingscheibe 12 gesteuert, da diese überhaupt erst durch die Schwingbewegung der Schwingscheibe 12 ermöglicht wird. Da die vernichtete Energie dabei von der Schwingfrequenz abhängig ist und die Schwingfrequenz unmittelbar von der Geschwindigkeit der relativ zueinander bewegten Teile abhängig ist, handelt es sich hier um eine geschwindigkeitsgeregelte Kraftbegrenzungseinrichtung.

Ferner ist die zweite Kraftbegrenzungseinrichtung 7 in Form eines Bandelementes zu erkennen, welches in eine radial und zentral verlaufende Nut 31 in einem an dem zweiten Teil 10 vorgesehenen zylindrischen Absatz 33 eingelegt ist. Der Absatz 33 wird radial außen in einem Abstand von einem axial von dem ersten Teil 9 vorstehenden Ring 32 umfasst, so dass zwischen dem ersten und dem zweiten Teil 9 und 10 ein geschlossener Ringraum 11 gebildet wird.

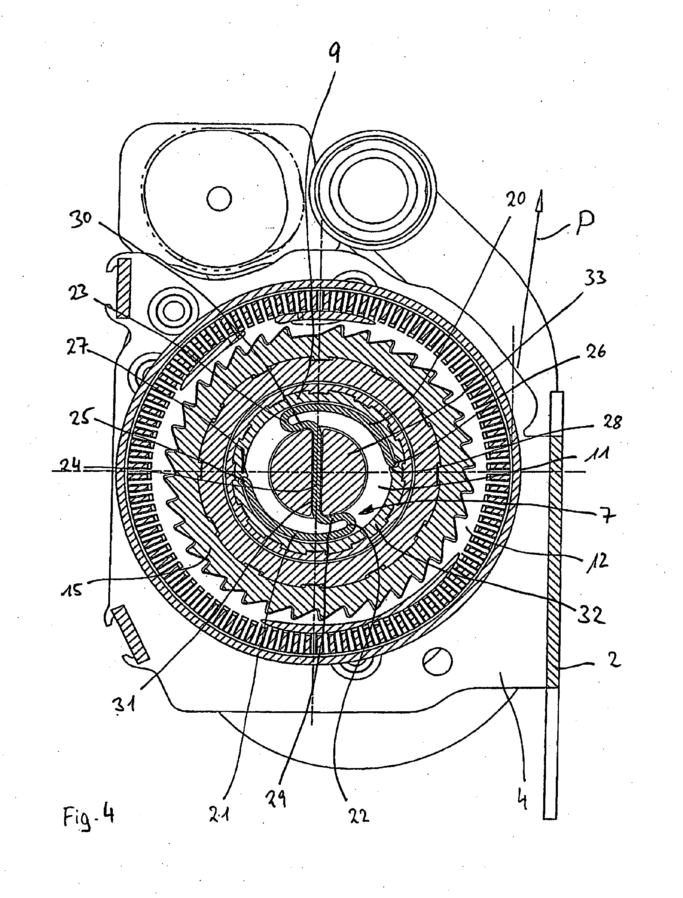

In der Figur 4 ist der Gurtaufroller in Schnittrichtung durch die erste Kraftbegrenzungseinrichtung 6 in Seitenansicht zu erkennen. Die zweite Kraftbegrenzungseinrichtung 7, gebildet durch das Bandelement, ist punktsymmetrisch zu der Drehachse des Gurtaufrollers angeordnet und verläuft ausgehend von einem geraden durch die Nut 31 verlaufenden Mittenabschnitt 24 an zwei Seiten in jeweils einem an der äußeren Randfläche des zylindrischen Absatzes 33 anliegenden Abschnitt 29 und 30. Im Verlauf ist das Bandelement von den Abschnitten 29 und 30 jeweils in einer Umlenkstelle 22 und 23 zu einem Abschnitt 20 und 21 entgegen der Gurtauszugsrichtung zurückgefaltet. Die Abschnitte 20 und 21 liegen an der radial inneren Randfläche des Ringes 32 an. Der Ring 32 ist an zwei Stellen mit radial nach innen ragenden Vorsprüngen 27 und 28 versehen, an denen das Bandelement mit den Enden 25 und 26 entgegen der Gurtauszugsrichtung formschlüssig anliegt.

Die erste Kraftbegrenzungseinrichtung 6 ist in diesem Fall ringförmig ausgebildet und konzentrisch zu der zweiten Kraftbegrenzungseinrichtung 7 und dem Ringraum 11 angeordnet. Ferner überlappen sich die erste und die zweite Kraftbegrenzungseinrichtung 6 und 7 und das erste und das zweite Teil 9 und 10 der Gurtwelle 1 in Axialrichtung des Gurtaufrollers im Bereich der Kraftbegrenzungseinrichtungen 6 und 7, so dass sich ein sehr einfacher konstruktiver Aufbau mit einem sehr geringen Bauraumbedarf ergibt. Ferner können dadurch günstige Kraft- und Momentenverhältnisse mit geringstmöglichen Axialkräften erzielt werden, so dass die beiden Teile 9 und 10 der Gurtwelle 1 auch während der Aktivierung der Kraftbegrenzungseinrichtungen 6 und 7 sicher zusammengehalten werden.

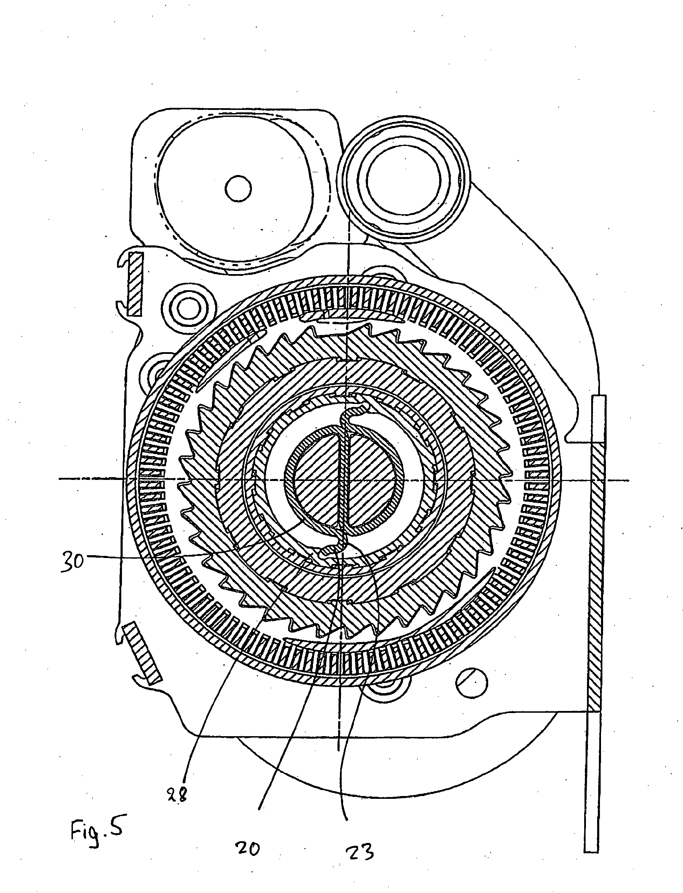

Für den Fall, dass die Gurtauszugskraft in Pfeilrichtung P bei blockiertem zweitem Teil 10 der Gurtwelle 1 einen vorbestimmten Wert übersteigt, beginnt das erste Teil 9 der Gurtwelle 1 und damit auch der Ring 32 entgegen dem Uhrzeigersinn zu drehen. Durch die Drehung des Ringes 32 werden die Abschnitte 20 und 21 durch die formschlüssige Anlage der Enden 25 und 26 mitgenommen und die Abschnitte 20 und 21 durch Umlaufen der Umlenkstellen 22 und 23 auf dem äußeren Rand des zylindrischen Abschnittes 33 des zweiten Teils 10 der Gurtwelle 1 aufgewickelt, bis die in der Figur 5 dargestellte Stellung erreicht ist, d.h. bis die Enden 25 und 26 nicht mehr formschlüssig an den Vorsprüngen 27 und 28 anliegen. Das Bandelement wird dabei in den umlaufenden Umlenkstellen 22 und 23 umgewalkt, wodurch die der Kraftbegrenzung zugrundeliegende Energie vernichtet wird. Da der Außenradius des zylindrischen Abschnitts 33 kleiner als der Innenradius des Ringes 32 ist, ist der dabei zurückgelegte Drehwinkel größer als der Winkel der Abschnitte 20 und 21 vor Beginn des kraftbegrenzten Gurtbandauszuges.

Der Vorteil dieser speziellen Ausführungsform liegt darin, dass der Nachteil, dass die geschwindigkeitsgeregelte erste Kraftbegrenzungseinrichtung 6 erst eine gewisse Relativgeschwindigkeit benötigt, um eine ausreichende Menge an Energie zu vernichten, d.h. dass das Kraftbegrenzungsniveau erst ansteigt oder sogar kurzzeitig nach dem Überwinden eines Losbrechmomentes abfällt, durch die parallel wirkende zweite Kraftbegrenzungseinrichtung 7 soweit kompensiert werden kann, dass der Kraftbegrenzungsverlauf insgesamt gleichmäßiger ist und das wirkende Kraftbegrenzungsniveau näher dem vorbestimmten Kraftbegrenzungsniveau verläuft. In der Addition der beiden durch die Kraftbegrenzungseinrichtungen 6 und 7 bewirkten Kraftbegrenzungsniveaus kann der Gesamtverlauf der Kraftbegrenzung außerdem insofern positiv verändert werden, indem das vorbestimmte Kraftbegrenzungsniveau deutlich früher erreicht wird.

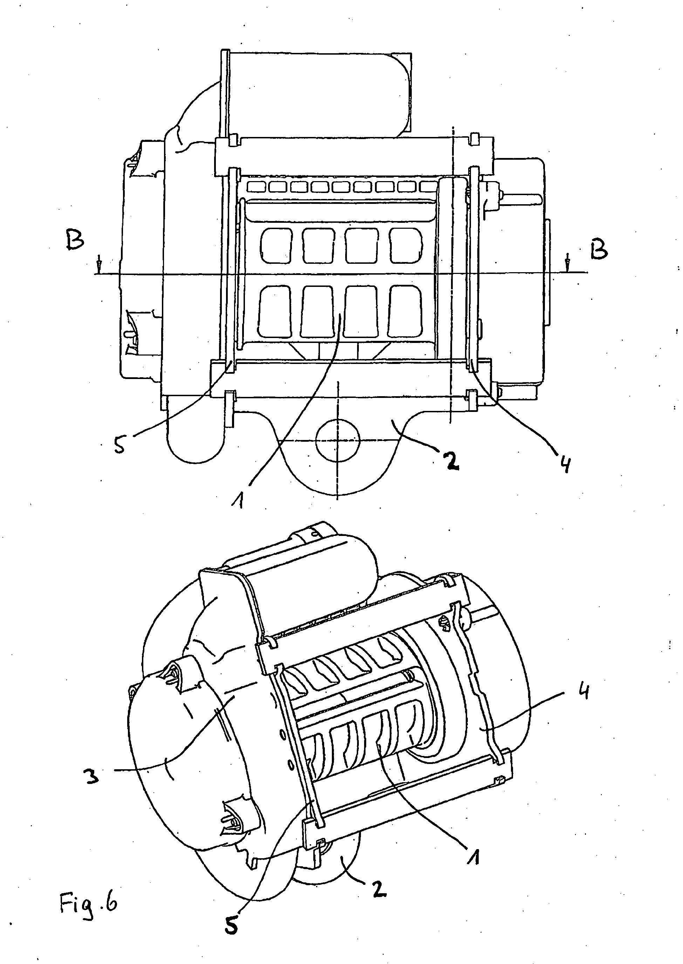

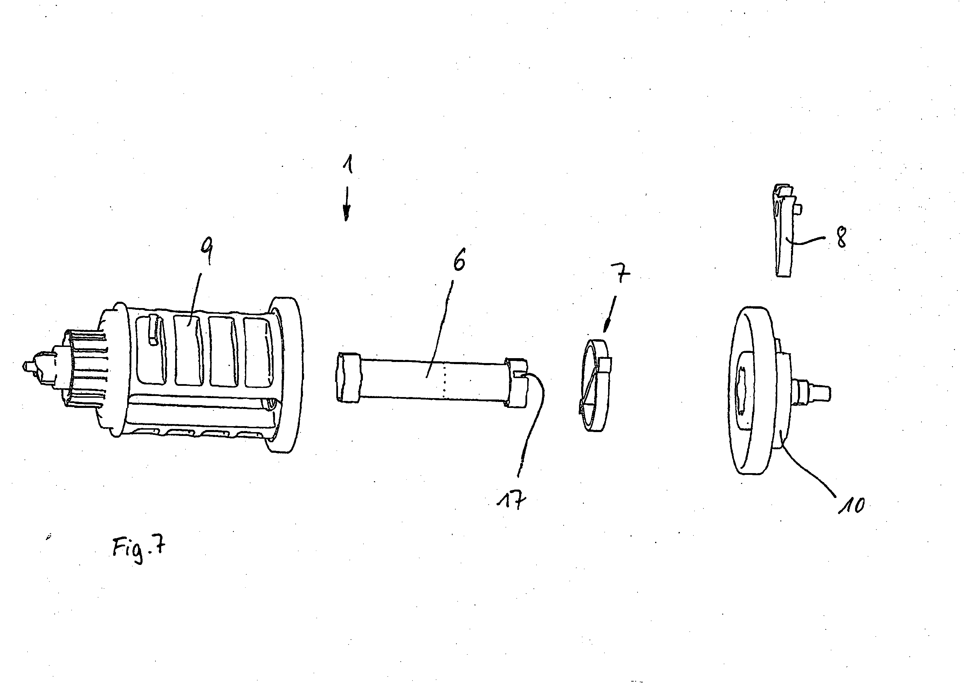

In den Figuren 6 und 7 ist eine alternative Ausführungsform der Erfindung mit einem Gurtaufroller identischen Aufbaus zu erkennen, bei der die erste Kraftbegrenzungseinrichtung 6 durch einen Torsionsstab gebildet ist. Der Torsionsstab weist an dem dem zweiten Teil 10 der Gurtwelle zugewandten Ende eine Nut 17 auf, in die das Bandelement eingelegt ist.

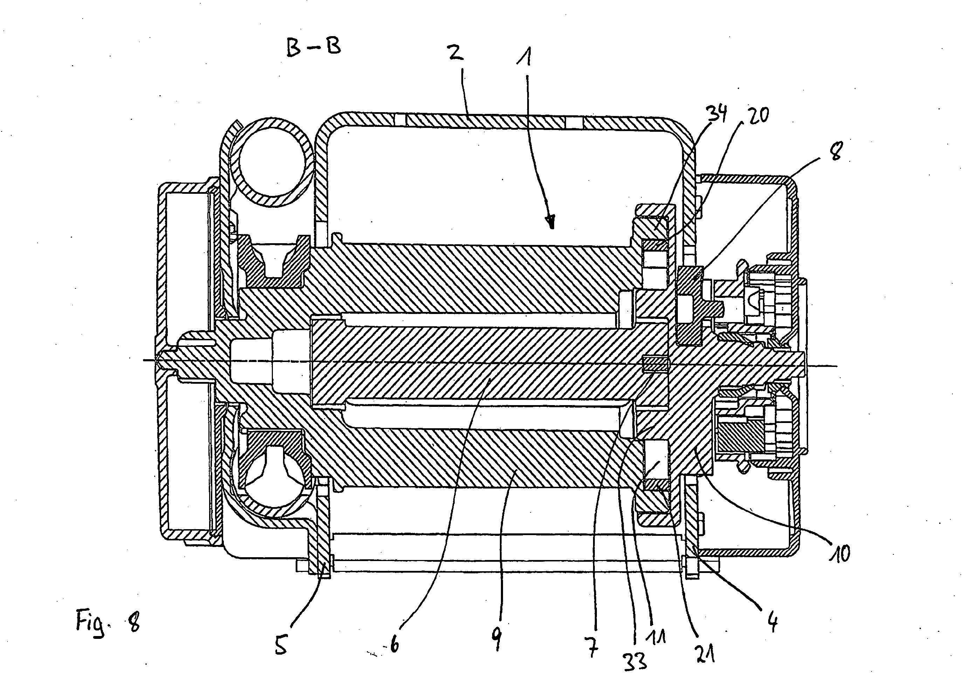

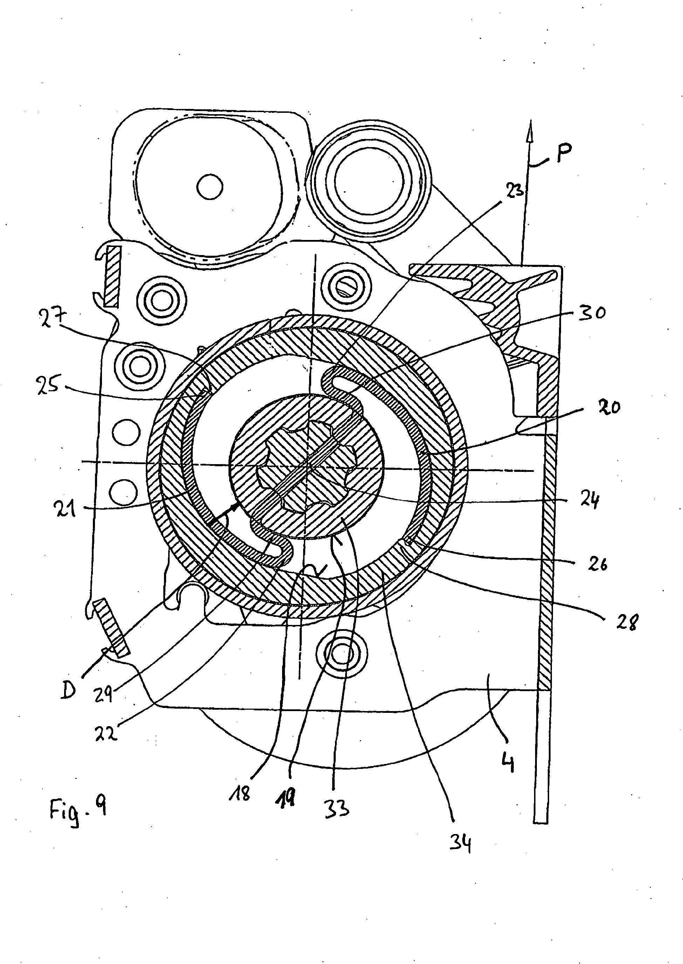

In den Figuren 8 und 9 ist derselbe Gurtaufroller in Schnittrichtung B-B der oberen Darstellung der Figur 6 und in Schnittrichtung durch die zweite Kraftbegrenzungseinrichtung 7 und das Ende des Torsionsstabes zu erkennen. Der Ringraum 11 ist in diesem Fall ebenfalls durch einen radial innen liegenden zylindrischen Absatz 33 des zweiten Teils 10 und einen an dem ersten Teil axial vorstehenden Ring 34 begrenzt, wobei die Funktionsweise und die Wirkung der zweiten Kraftbegrenzungseinrichtung 7 identisch zu der in dem Ausführungsbeispiel der Figuren 1 bis 5 ist. Das Bandelement ist in diesem Fall mit dem Mittenabschnitt 24 durch eine Nut in dem Ende des Torsionsstabes und durch eine Nut in dem zylindrischen Absatz 33 gelegt, so dass das zweite Teil 10 der Gurtwelle 1, der Torsionsstab und das Bandelement zu einem festen Verbund drehfest miteinander verbunden sind.

Der Ringraum 11 ist ferner so bemessen, dass der Abstand D der den Ringraum 11 radial innen und außen begrenzenden Wandungen 19 und 18, ausgehend von den Umlenkstellen 22 und 23 hin zu den radial außen anliegenden Enden 25 und 26 der Abschnitte 20 und 21 zunimmt. Da die in den umlaufenden Umlenkstellen 22 und 23 vernichtete Energie direkt von dem Abstand D abhängt und zwar nach dem Zusammenhang, je kleiner der Abstand D im Bereich der Umlenkstellen 22 und 23 ist, desto größer ist die in den Umlenkstellen 22 und 23 vernichtete Energie, kann dadurch ein degressiver Kraftbegrenzungsverlauf der zweiten Kraftbegrenzungseinrichtung 7 erzielt werden. Dieser degressive Kraftbegrenzungsverlauf weist einen entgegen des ansteigenden Kraftbegrenzungsniveaus der ersten Kraftbegrenzungseinrichtung 6 gerichteten Verlauf auf, so dass sich insgesamt in der Summe ein konstanteres Kraftbegrenzungsniveau erzielen lässt. Sofern dies erwünscht ist, kann auch ein progressiver Kraftbegrenzungsverlauf der zweiten Kraftbegrenzungseinrichtung 7 erzielt werden, indem der Abstand D, ausgehend von den Umlenkstellen 22 und 23 in derselben Richtung abnimmt.

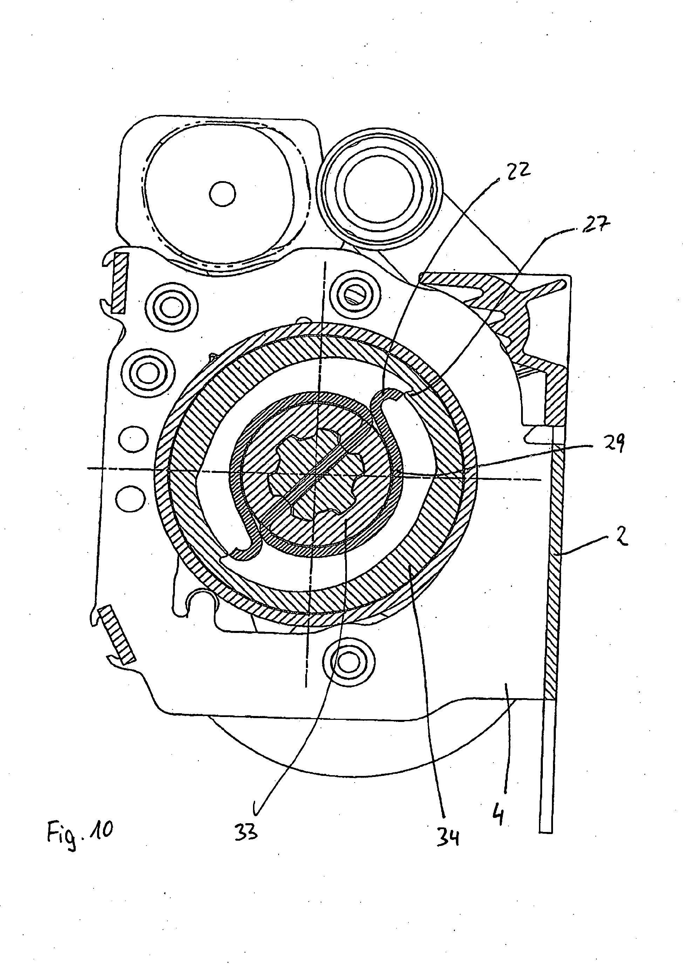

In der Figur 10 ist derselbe Gurtaufroller aus der Figur 9 nach der Aktivierung der zweiten Kraftbegrenzungseinrichtung 7 zu erkennen. Da die Verbindung zwischen dem ersten Teil 9 und dem zweiten Teil 10 der Gurtwelle 1 über das Bandelement nach dem Umlaufen der Umlenkstellen 22 und 23 aufgehoben ist, wirkt ab diesem Drehwinkel ausschließlich die erste Kraftbegrenzungseinrichtung 6.

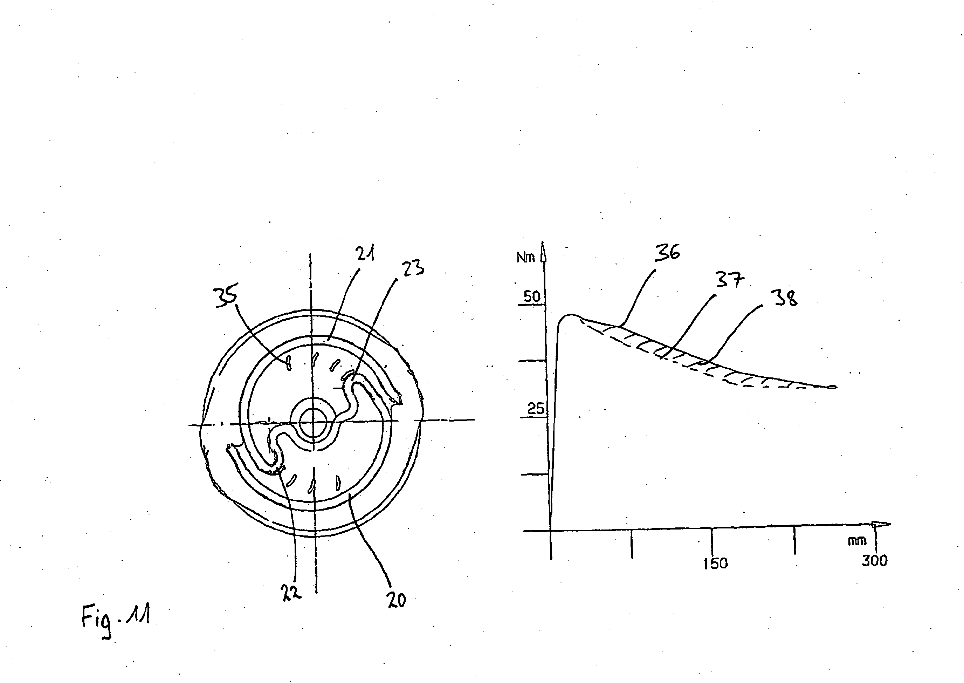

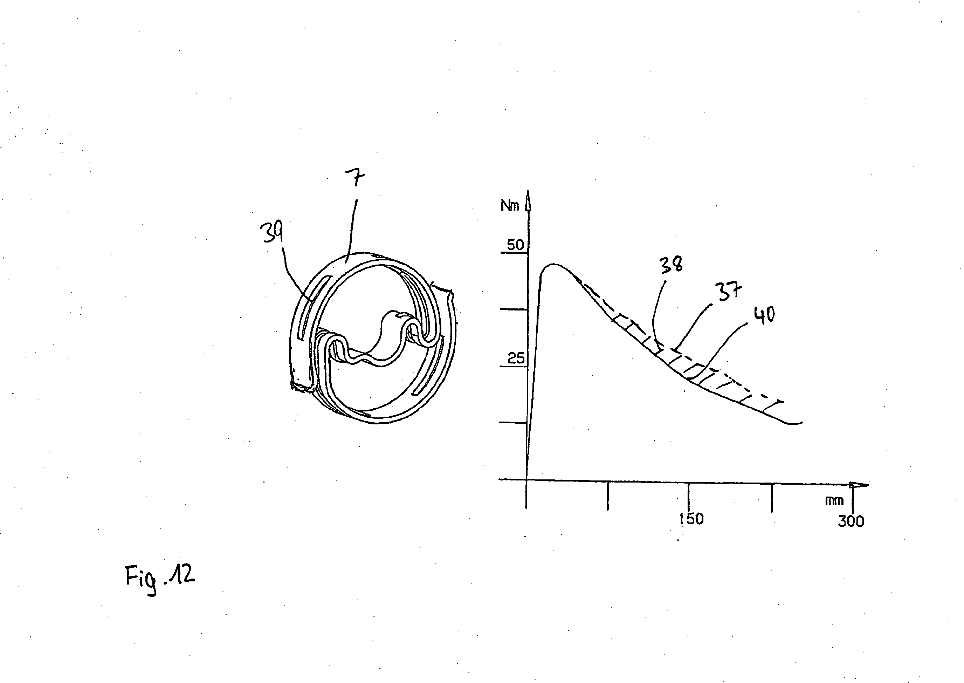

In den Figuren 11 und 12 sind exemplarisch verschiedene weitere Ausführungsformen der zweiten Kraftbegrenzungseinrichtung 7 einschließlich der damit zu erzielenden Kraftbegrenzungskurven zu erkennen. Alle Kraftbegrenzungskurven sind erkennbar degressiv, d.h. in diesem Fall kontinuierlich abnehmend. Es wäre aber auch denkbar, einen stufenartigen Verlauf z.B. durch eine sprungartige Verminderung oder Vergrößerung des Abstandes D zu verwirklichen.

In dem in der Figur 11 dargestellten Ausführungsbeispiel sind an dem zweiten Teil 10 der Gurtwelle 1 Formgestaltungen 35 in Form von in den Ringraum 11 seitlich hineinragenden Rippen vorgesehen, welche das Umlaufen der Umlenkstellen 22 und 23 behindern oder sogar von diesen während des Umlaufens abgeschert werden. Dadurch kann das Kraftbegrenzungsniveau der zweiten Kraftbegrenzungseinrichtung 7 weiter von der Kurve 37 auf die Kurve 36 erhöht werden. Die durch die Formgestaltungen 35 bewirkte Zunahme des Kraftbegrenzungsniveaus ist durch den schraffierten Bereich 38 in der rechten Darstellung der Figur 11 dargestellt.

In dem in der Figur 12 dargestellten Ausführungsbeispiel der Erfindung sind in dem Bandelement zwei Ausnehmungen 39 vorgesehen, welche den Verformungswiderstand des Bandelementes in diesem Bereich herabsetzen. Derselbe Effekt kann auch durch eine Verringerung der Materialstärke oder der Breite des Bandelementes herbeigeführt werden. Aufgrund des verringerten Verformungswiderstandes wird die Kraftbegrenzungskurve von dem Verlauf 37 auf den Verlauf 40 herabgesetzt, wobei die Verringerung des Kraftbegrenzungsniveaus durch den schraffierten Bereich 38 dargestellt ist.

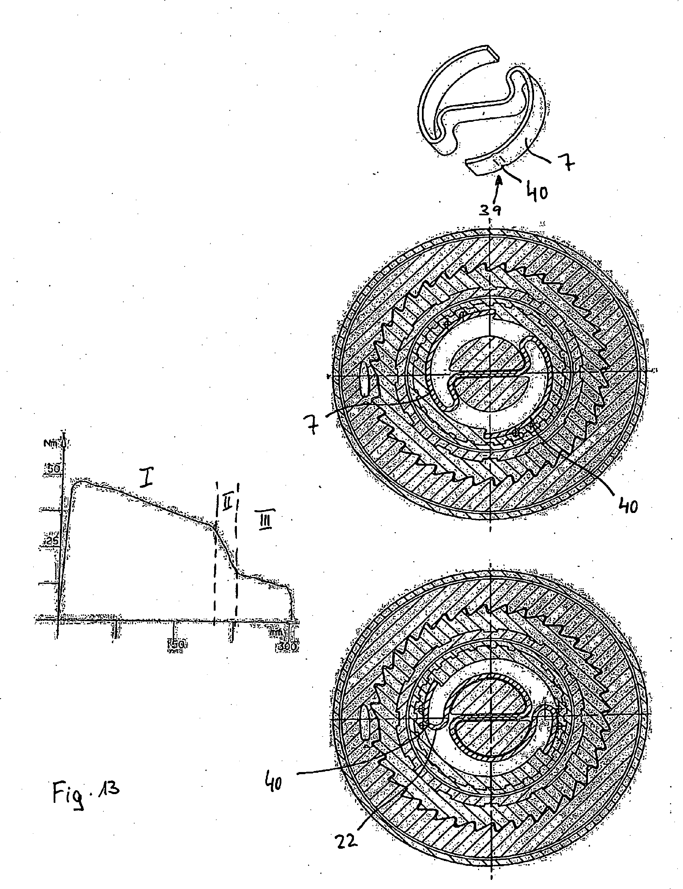

In der Figur 13 ist eine weitere Ausführungsform der Erfindung zu erkennen, bei der die Ausnehmung 39 derart bemessen ist, dass sie eine Sollbruchstelle 40 bildet, welche beim Durchlaufen der Umlenkstelle 22 bricht. Die Sollbruchstelle 40 ist so bemessen, dass sie in der Phase der Kraftbegrenzung vor dem Durchlaufen der Umlenkstelle 22 die Schubkräfte übertragen kann, so dass das Kraftbegrenzungsniveau in dem Bereich I unverändert ist. Beim Durchlaufen der Umlenkstelle 22 bricht die Sollbruchstelle 40 und das Kraftbegrenzungsniveau sinkt schlagartig in dem Bereich II bis zu einem Bereich III. Die Stellung des Bandelementes 7 zu dem Zeitpunkt des Brechens der Sollbruchstelle 40 ist in der unteren Schnittdarstellung gezeigt.

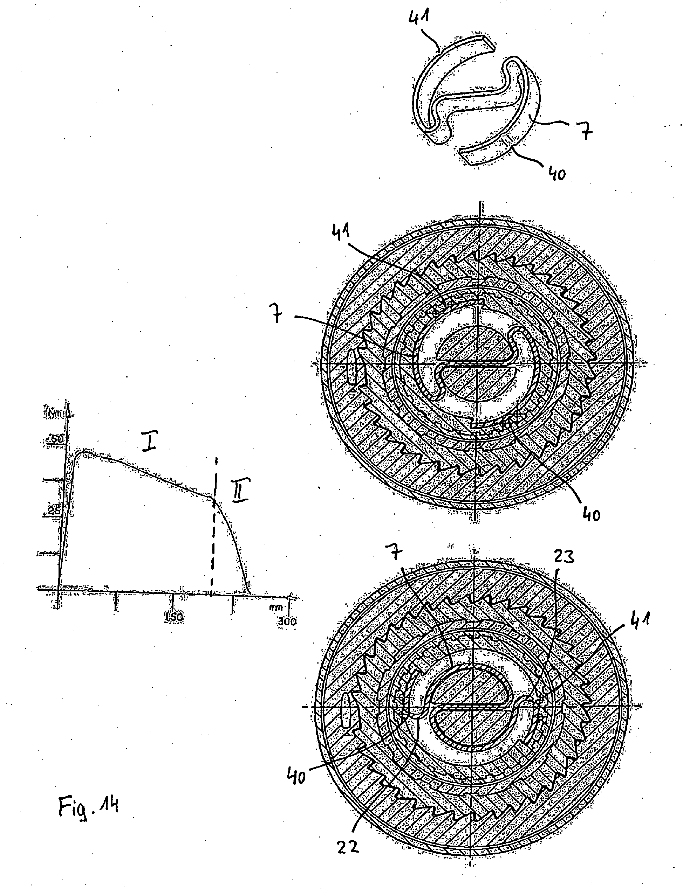

In der Figur 14 ist eine weiterentwickelte Ausführungsform dargestellt, bei der zwei Sollbruchstellen 40 und 41 vorgesehen sind, welche ebenfalls durch Materialschwachstellen gebildet sind, die wiederum durch Ausnehmungen 39 oder Sicken gebildet sind. Beide Sollbruchstellen 40 und 41 sind derart angeordnet, dass sie gleichzeitig die Umlenkstellen 22 und 23 durchlaufen und damit auch im Wesentlichen gleichzeitig brechen. Dadurch sinkt das durch das Bandelement 7 bewirkte Kraftbegrenzungsniveau ab dem Bereich II der Kraftbegrenzungskurve schlagartig auf Null, wobei die Kurve aufgrund von Restverformungen steil abfällt.

Für den Fall, dass die Sollbruchstellen 40 und 41 die Umlenkstellen 22 und 23 zu unterschiedlichen Zeitpunkten durchlaufen, ergibt sich ein entsprechend gestufter Verlauf der Kraftbegrenzungskurve.

## Patentansprüche

1. Gurtaufroller mit zwei parallel wirkenden Kraftbegrenzungseinrichtungen (6,7) mit
- einer in den Schenkeln (4,5) eines U-förmigen Rahmens (2) um eine Drehachse drehbar gelagerten zweiteiligen Gurtwelle (1), welche ein erstes Teil (9) aufweist, auf dem ein Gurtband aufwickelbar ist, und ein zweites Teil (10) aufweist, welches mittels einer fahrzeugsensitiv und/oder gurtbandsensitiv ansteuerbaren Blockiereinrichtung (8) gegenüber wenigstens einem der Schenkel (4,5) des Rahmens (2) fahrzeugfest verriegelbar ist, und
- einer ersten Kraftbegrenzungseinrichtung (6), welche bei einer Aktivierung eine kraftbegrenzte Relativbewegung zwischen dem ersten Teil (9) und dem zweiten Teil (10) ermöglicht, und
- einer zweiten Kraftbegrenzungseinrichtung (7), welche bei einer Aktivierung parallel zu der ersten Kraftbegrenzungseinrichtung (6,16) wirkt, wobei
- sich das erste und das zweite Teil (9,10) der Gurtwelle (1) in einem Abschnitt zwischen den Schenkeln (4,5) des Rahmens (2) unter Bildung eines Ringraumes (11) axial überlappen, und
- die zweite Kraftbegrenzungseinrichtung (7) durch ein Bandelement gebildet ist, welches mit einem ersten Abschnitt (20,21) an einer radial äußeren Wandung (18) des Ringraumes (11) und mit einem zweiten Abschnitt (29,30) an der radial inneren Wandung (19) des Ringraumes (11) anliegt und zwischen dem ersten und dem zweiten Abschnitt (20,21,29,30) in einer Umlenkstelle (22,23) umgelenkt ist, wobei
- das Bandelement bei einer Relativbewegung zwischen dem ersten und dem zweiten Teil (9,10) durch ein Umlaufen der Umlenkstelle (22,23) energieverzehrend von der äußeren Wandung (18) auf die innere Wandung (19) oder umgekehrt ab- oder aufwickelbar ist,
**dadurch gekennzeichnet, dass**
- an dem ersten oder dem zweiten Teil (9,10) der Gurtwelle (1) elastisch und/oder plastisch verformbare Formgestaltungen (35) vorgesehen sind, welche in den von der Umlenkstelle (22,23) während des Umlaufens durchlaufenen Bereich des Ringraumes (11) hineinragen.

2. Gurtaufroller nach Anspruch 1, **dadurch gekennzeichnet, dass** das Bandelement mit einem Ende (25,26) des ersten oder zweiten Abschnitts (20,21,29,30) formschlüssig entgegen der Drehrichtung des ersten Teils (9) während des kraftbegrenzten Gurtbandauszuges an dem ersten oder zweiten Teil (9,10) der Gurtwelle (1) festgelegt ist.

3. Gurtaufroller nach Anspruch 1 oder 2, **dadurch gekennzeichnet, dass** das Bandelement wenigstens zwei Umlenkstellen (22,23) aufweist, welche symmetrisch zu der Drehachse des Gurtaufrollers angeordnet sind.

4. Gurtaufroller nach Anspruch 3, **dadurch gekennzeichnet, dass** das zweite Teil (10) der Gurtwelle (1) an der Stirnseite eine radial gerichtete Nut (31) aufweist, in die das Bandelement eingelegt ist.

5. Gurtaufroller nach einem der vorangegangenen Ansprüche,
**dadurch gekennzeichnet, dass** die radial äußere Wandung (18) und die radial innere Wandung (19) des Ringraumes (11) einen in Umfangsrichtung zunehmenden oder abnehmenden Abstand (D) aufweisen.

6. Gurtaufroller nach einem der vorangegangenen Ansprüche,
**dadurch gekennzeichnet, dass** die erste Kraftbegrenzungseinrichtung (6) eine geschwindigkeitsgeregelte Kraftbegrenzungseinrichtung ist.

7. Gurtaufroller nach Anspruch 6, **dadurch gekennzeichnet, dass** die geschwindigkeitsgeregelte Kraftbegrenzungseinrichtung ringförmig ausgebildet und konzentrisch zu der zweiten Kraftbegrenzungseinrichtung (7) angeordnet ist.

8. Gurtaufroller nach Anspruch 6 oder 7, **dadurch gekennzeichnet, dass** die geschwindigkeitsgeregelte Kraftbegrenzungseinrichtung axial überlappend zu der zweiten Kraftbegrenzungseinrichtung (7) angeordnet ist.

9. Gurtaufroller nach einem der vorangegangenen Ansprüche,
**dadurch gekennzeichnet, dass** das Bandelement abschnittsweise durch Ausnehmungen (39) durch eine geringeren Breite oder Dicke geschwächt ist.

10. Gurtaufroller nach Anspruch 9, **dadurch gekennzeichnet, dass** wenigstens eine der Ausnehmungen (39) als eine beim Durchlaufen der Umlenkstelle brechende Sollbruchstelle (40,41) ausgebildet ist.

## Claims

1. Seat belt retractor comprising two parallel-acting load limiting devices (6, 7) with
- a two-part belt shaft (1) which is pivot-mounted around a rotational axis in the legs (4, 5) of a U-shaped frame (2), and which comprises a first part (9), onto which a belt webbing can be wound, and a second part (10), which can be locked so as to be vehicle-fixed in relation to at least one of the legs (4, 5) of the frame (2) using a locking device (8) which can be actuated in a vehiclesensitive and/or belt webbing-sensitive manner, and
- a first load limiting device (6) which upon activation enables a load-limited relative motion between the first part (9) and the second part (10), and
- a second load limiting device (7) which upon activation acts parallel to the first load limiting device (6, 16), wherein
- the first and the second part (9, 10) of the belt shaft (1) overlap axially forming a ring chamber (11) in a section between the legs (4, 5) of the frame (2), and
- the second load limiting device (7) is formed by a band element which with a first portion (20, 21) rests against a radial outer wall (18) of the ring chamber (11) and with a second portion (29, 30) rests against the radial inner wall (19) of the ring chamber (11), and which is deflected between the first and the second portion (20, 21, 29, 30) in a deflection point (22, 23), wherein
- the band element, upon a relative motion between the first and the second part (9, 10), can be wound off the outer wall (18) and onto the inner wall (19) or the other way round in an energy absorbing manner by the deflection point (22, 23) revolving,
**characterized in that**
- on the first or the second part (9, 10) of the belt shaft (1) elastically and/or plastically deformable designed formations (35) are provided, which extend into the region of the ring chamber (11) passed through by the deflection point (22, 23) while revolving.

2. Seat belt retractor according to claim 1, **characterized in that** the band element with one end (25, 26) of the first or second portion (20, 21, 29, 30) is form-lock fixed on the first or second part (9, 10) of the belt shaft (1) against the direction of rotation of the first part (9) during the load-limited belt webbing extraction.

3. Seat belt retractor according to claim 1 or 2, **characterized in that** the band element comprises at least two deflection points (22, 23) which are located symmetrically to the rotational axis of the seat belt retractor.

4. Seat belt retractor according to claim 3, **characterized in that** the second part (10) of the belt shaft (1) at the front face comprises a radially directed groove (31), into which the band element is inserted.

5. Seat belt retractor according to any one of the preceding claims, **characterized in that** the radial outer wall (18) and the radial inner wall (19) of the ring chamber (11) have a distance (D) increasing or decreasing in the circumferential direction.

6. Seat belt retractor according to any one of the preceding claims, **characterized in that** the first load limiting device (6) is a speed-controlled load limiting device.

7. Seat belt retractor according to claim 6, **characterized in that** the speed-controlled load limiting device is designed to be ring-shaped and is located concentrically to the second load limiting device (7).

8. Seat belt retractor according to claim 6 or 7, **characterized in that** the speed-controlled load limiting device is located to be axially overlapping with respect to the second load limiting device (7).

9. Seat belt retractor according to any one of the preceding claims, **characterized in that** the band element in sections is weakened by recesses (39) due to a smaller width or thickness.

10. Seat belt retractor according to claim 9, **characterized in that** at least one of the recesses (39) is designed to be a predetermined breaking point (40, 41) breaking when the deflection point passes through.

## Revendications

1. Enrouleur de ceinture doté de deux moyens de limitation de force agissant en parallèle (6, 7) comportant :
- un arbre de ceinture (1) en deux parties monté rotatif dans les branches (4, 5) d'un cadre (2) en forme de U autour d'un axe de rotation, qui présente un premier élément (9), sur lequel peut être enroulée une bande de ceinture, et un second élément (10), lequel peut être verrouillé solidaire au véhicule au moyen d'un moyen de blocage (8) pouvant être commandé de manière à réagir au véhicule et/ou à la bande de ceinture par rapport à au moins une branche (4, 5) du cadre (2), et
- un premier moyen de limitation de force (6), qui permet en cas d'activation un déplacement relatif à force limitée entre le premier élément (9) et le second élément (10), et
- un second moyen de limitation de force (7), qui agit en cas d'activation parallèlement au premier moyen de limitation de force (6, 16),
- le premier et le second élément (9, 10) de l'arbre de ceinture (1) se chevauchant axialement dans une section située entre les branches (4, 5) du cadre (2) en formant un espace annulaire (11), et
- le second moyen de limitation de force (7) étant formé par un élément en forme de bande, qui, par une première section (20, 21), s'appuie contre une paroi externe radiale (18) de l'espace annulaire (11) et, par une seconde section (29, 30), s'appuie contre la paroi interne radiale (19) de l'espace annulaire (11) et étant dévié entre la première et la seconde section (20, 21, 29, 30) en un point de retournement (22, 23),
- l'élément en forme de bande pouvant être déroulé ou enroulé de la paroi externe (18) sur la paroi interne (19) ou inversement en consommant de l'énergie, lors d'un mouvement relatif entre le premier et le second élément (9, 10) par le point de retournement (22, 23) circulant,
**caractérisé par le fait que**
- des formes (35) élastiquement et/ou plastiquement déformables sont prévues au premier ou au second élément (9, 10) de l'arbre de ceinture (1), qui font saillie dans la zone de l'espace annulaire (11) parcourue par le point de retournement (22, 23) pendant la circulation.

2. Enrouleur de ceinture selon la revendication 1, **caractérisé par le fait que** l'élément en forme de bande est fixé avec une extrémité (25, 26) de la première ou de la seconde section (20, 21, 29, 30) par complémentarité de forme dans le sens opposé au sens de rotation du premier élément (9) pendant l'extraction de la bande de ceinture à force limitée au premier ou au second élément (9, 10) de l'arbre de ceinture (1).

3. Enrouleur de ceinture selon la revendication 1 ou 2, **caractérisé par le fait que** l'élément en forme de bande présente au moins deux points de retournement (22, 23), qui sont disposés symétriques à l'axe de rotation de l'enrouleur de ceinture.

4. Enrouleur de ceinture selon la revendication 3, **caractérisé par le fait que** le second élément (10) de l'arbre de ceinture (1) présente à la face avant une rainure (31) dirigée radialement, dans laquelle est inséré l'élément en forme de bande.

5. Enrouleur de ceinture selon l'une quelconque des revendications précédentes, **caractérisé par le fait que** la paroi externe radiale (18) et la paroi interne radiale (19) de l'espace annulaire (11) présentent une distance (D) croissante ou décroissante dans le sens circonférentiel.

6. Enrouleur de ceinture selon l'une quelconque des revendications précédentes, **caractérisé par le fait que** le premier moyen de limitation de force (6) est un moyen de limitation de force à régulation de vitesse.

7. Enrouleur de ceinture selon la revendication 6, **caractérisé par le fait que** le moyen de limitation de force à régulation de vitesse est réalisé de forme annulaire et est disposé de manière concentrique par rapport au second moyen de limitation de force (7).

8. Enrouleur de ceinture selon la revendication 6 ou 7, **caractérisé par le fait que** le moyen de limitation de force à régulation de vitesse et le second moyen de limitation de force (7) sont disposés se chevauchant axialement.

9. Enrouleur de ceinture selon l'une quelconque des revendications précédentes, **caractérisé par le fait que** l'élément en forme de bande est fragilisé par sections par des évidements (39), par une diminution de largeur ou d'épaisseur.

10. Enrouleur de ceinture selon la revendication 9, **caractérisé par le fait qu'**au moins un des évidements (39) est réalisé sous la forme d'un point destiné à la rupture (40, 41) se rompant en cas de passage du point de retournement.
